# EUROPEAN PATENT APPLICATION

(11) **EP 3 363 674 A1**
(43) Date of publication of application: **22.08.2018**
(21) Application number: 17170329.1
(22) Date of filing: 10.05.2017
(51) Int. Cl.: B60L 8/00, B60L 7/10

(54) **WIND POWER RECOVERY SYSTEM AND METHOD FOR A GUIDED VEHICLE**

(30) Priority: 16.02.2017 EP 17380006
(71) Applicant: Siemens Rail Automation S.A.U., 28760 Tres Cantos (Madrid) (ES)
(72) Inventor: ARCAS MARTIN, Sergio, 28760 Tres Cantos (ES)
(74) Representative: Maier, Daniel Oliver

(57) **Abstract**

The present invention concerns a wind power recovery system (1) and method for recovering wind power energy within a guided vehicle (2), the system (1) comprising:
- a bearing structure (11) configured for being removably installed on-board the guided vehicle (2);
- a wind turbine module (12) fixed to the bearing structure (11) and comprising at least one wind turbine (121);
- at least one generator (13) for converting rotational mechanical energy of the wind turbine (121) into electrical energy, said generator (13) being supported by the bearing structure (11);
- a control unit (14) fixed to the bearing structure (11) and configured for automatically controlling and commanding an opening or closing of a mechanical grille (4) for regulating an entry of frontal air flow (3) through the wind turbine (121);
- a connector (16) for electrically connecting the generator to an electrical network of the guided vehicle (2) in order to provide said electrical network with said electrical energy.

## Description

The present invention concerns a wind power recovery system and method for a guided vehicle.

The present invention is directed to energy recovery techniques adapted for guided vehicles. "Guided vehicle" according to the present invention refers generally to a device for carrying or transporting substances, objects or individuals that is guided by at least one guiding means, such as a rail, and refers more particularly to public transport means such as trains or train units, subways, etc., which are guided along a route or railway by at least one rail, in particular by two rails.

It is well known that guided vehicles consume energy not only for moving, but also for the different services and facilities they may offer, for instance for the lighting, heating, ventilating and air conditioning, entertainment system, etc., of passenger coaches of a train. Minimizing energy consumption remains an open-issue within the field of guided vehicles.

In order to decrease the overall energy consumed by guided vehicles, energy recovery systems have been developed. Examples of energy recovery systems are regenerative brake systems, wherein a main energy supply is used as energy input for moving the vehicle, and the regenerative brake system converts kinetic energy resulting from slowing down said vehicle into usable energy instead of heat, making it possible to use the converted energy for powering some device instead of using the main energy supply, decreasing therefore the required overall energy input for said vehicle. The same applies to electric motors used in reverse function as generators. By this way, energy that would otherwise be lost is transformed in usable energy, minimizing therefore the needs of energy input for the vehicle.

An objective of the present invention is to provide an efficient and intelligent energy recovery system and method adapted for a guided vehicle and capable of decreasing the overall energy consumption of the guided vehicle.

The aforementioned objective is achieved by a system and a method configured for recovering wind power energy according to the independent claims. Further embodiments and other advantages of the present invention are proposed in the dependent claims.

The invention proposes in particular a wind power recovery system configured for being installed on-board a guided vehicle, the wind power recovery system comprising:
- a bearing structure configured for being removably installed on-board the guided vehicle;
- a wind turbine module fixed to the bearing structure and comprising at least one wind turbine, said wind turbine module comprising preferentially an inlet section and an outlet section between which the wind turbine is located, notably inside a housing of the wind turbine module;
- at least one generator for converting rotational mechanical energy of the wind turbine into electrical energy, said generator being supported by the bearing structure;
- a control unit fixed to the bearing structure and configured for automatically controlling and commanding an opening or closing of a mechanical grille notably in function of a braking status of the guided vehicle, for regulating an entry of frontal air flow through the wind turbine, for instance through the air inlet section of the wind turbine module, said control unit being further preferentially configured for controlling the electrical energy outputted by the generator;
- optionally, energy storage means, like a battery, for storing the electrical energy outputted by the generator and preferentially fixed to the bearing structure;
- a connector or plug for electrically connecting the generator to an electrical network of the guided vehicle.

The present invention further proposes in particular a method for recovering wind power energy within a guided vehicle by using a wind power recovery system comprising a wind turbine module, a generator and a control unit preferentially fixed to a removable bearing structure installed within the guided vehicle, said method comprising:
- receiving by the control unit an input related to a braking status of the guided vehicle;
- processing said input by means of the control unit in order to determine if the guided vehicle is braking; and
- if the guided vehicle is braking, then commanding by means of said control unit the opening of a mechanical grille if not already opened, the opening of said mechanical grille being configured for letting a frontal air flow moving through at least one wind turbine of the wind turbine module, driving into rotation said wind turbine, wherein a closing of said mechanical grille closing the air flow through the wind turbine;
- generating electrical energy from the rotation of the wind turbine by means of a generator connected to the wind turbine;
- using said electrical energy as auxiliary power source for devices connected to an electrical network of the guided vehicle.

The present invention proposes therefore to use a wind turbine as source of auxiliary power within a guided vehicle, notably when the guided vehicle is braking. In particular, the wind power recovery system is installed within the structure of the guided vehicle, i.e. inside the guided vehicle and so that air flow - with regard to a referential fixed to the guided vehicle and that would be generated during the guided vehicle movement - might be used for rotating the wind turbine of the wind power recovery system and generating electrical power that might be stored or used within the guided vehicle electrical network. According to the present invention, the wind power recovery system is a module that might be easily installed in or removed from the guided vehicle, preferentially located at the front end of the guided vehicle when installed inside said guided vehicle so that a frontal air flow is used for rotating the wind turbine. Preferentially, the bearing structure of the wind power recovery system is configured for being slidably installable inside the guided vehicle. It is for instance configured for sliding or rolling according to a direction parallel to the length of the guided vehicle, from its front end inside an adapted housing or cavity inside the guided vehicle. The bearing structure serves as support for the wind turbine module, generator, control unit, and optionally energy storage means. Having a removable wind power recovery system enables notably an easy maintenance of the system.

The present invention also concerns finally a guided vehicle comprising a frontal cavity opening at the front end of the guided vehicle, that may be closed by a mechanical grille controlled by a control unit of a wind power recovery system, wherein said frontal cavity extends preferentially under the driving cabin of the guided vehicle according to its length and is configured for housing said wind power recovery system and suited for an insertion or an extraction of said wind power recovery system from said front end of the guided vehicle.

To summarize, the present invention concerns a wind power recovery system fitting into a cavity of a guided vehicle, and allowing the latter to take advantage of air flow for creating electrical energy and using the latter as auxiliary supply power. The installation of the wind power recovery system inside the guided vehicle at its front end decreases the drag, and the intelligent control of the mechanical grille as explained below ensures that the wind power recovery system consumes less energy than generated.

Further aspects of the present invention will be better understood through the following drawings, wherein like numerals are used for like and corresponding parts:
- Figure 1: schematic representation of a first preferred embodiment of a wind power recovery system installed inside a guided vehicle according to the invention.
- Figure 2: detailed view of a preferred embodiment of a wind power recovery system removed from the guided vehicle.
- Figure 3: block diagram for the control of the mechanical grille.

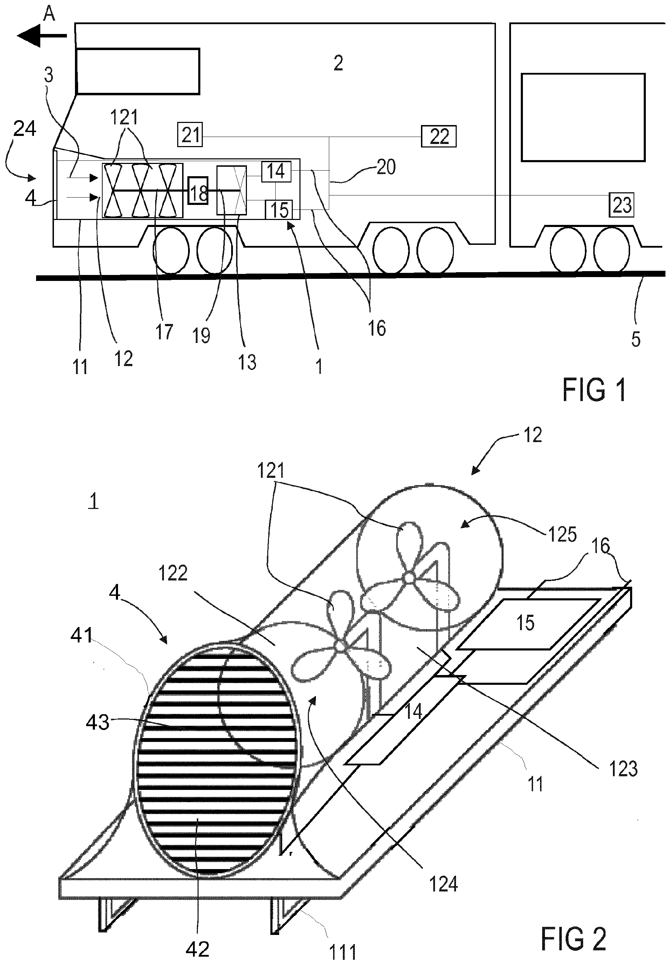

Figure 1 shows a wind power recovery system 1 according to the invention mounted on-board a guided vehicle 2 which is configured to follow a route defined by one or two rails 5, the guided vehicle 2 moving for instance according to the direction A illustrated by the corresponding arrow. The wind power recovery system 1 according to the invention is preferentially installed at the front end of the guided vehicle 2, preferentially under the driving cabin. When installed at the front end of the guided vehicle 2, the wind power recovery system 1 is configured for having a wind turbine 121 facing a frontal air flow 3 that might enter through a frontal aperture 24 opened at the front end of the guided vehicle 2 and controlled by a mechanical grille 4. The strategical position at the fore end of the guided vehicle 2 under the driving cabin allows a maximization of the air flow 3 (notably due to higher air pressure) through the wind turbine 121 and therefore maximizes by the same way the amount of generated electrical power while maintaining for the guided vehicle driver an optimal vision of the railway. Another advantage of the specific location of the wind power recovery system 1 according to the invention is to enable its insertion inside, and extraction from, the guided vehicle 2 from the front end of said guided vehicle 2 using a device that is configured for moving in front of the guided vehicle 2 on the same rails as the guided vehicle 2. Furthermore, according to said specific location of the wind power recovery system 1, the main structure of the guided vehicle 2 does not need to be modified for incorporating said wind power recovery system 1. Indeed only a redesign of the front part of the guided vehicle 2 is needed for enabling the insertion and extraction of the wind power recovery system 1.

According to the present invention, the guided vehicle 2 comprises a cavity, located at its front end, preferentially below the driving cabin, and suited for housing the wind power recovery system 1 according to the invention. The latter is indeed configured for fitting into said cavity of the guided vehicle 2, the length of the cavity and the length of the wind power recovery system 1 being notably substantially equal. Said cavity preferentially extends according to the length of the guided vehicle 2 (i.e. in the same direction as the rails 5 extend when the guided vehicle 2 is supported by said rails 5), so that the frontal aperture 24 of the cavity is configured for facing an incoming frontal air flow 3 when the guided vehicle 2 is moving in the direction A. Said cavity may comprise guiding means, such as rails, for enabling an insertion, respectively an extraction, of the wind power recovery system 1 inside, respectively outside of, the cavity of the guided vehicle 2. For instance, said guiding means are suitable for cooperating with moving means of the bearing structure 11. Said cavity comprises in particular connectors for automatically connecting the wind power recovery system 1 to an electrical network of the guided vehicle 2 and/or for providing a data input to a control unit 14 of the wind power recovery system. Said cavity opens at the frontal aperture 24 at the front end of the guided vehicle and might be closed at said frontal aperture 24 by said mechanical grille 4, which might be removed or opened for the insertion or extraction of the wind power recovery system 1. According to another embodiment, the mechanical grille 4 is part of the wind power recovery system 1, and a protection plate might be used for closing said frontal aperture 24, i.e. the opening of the cavity at the front end of the guided vehicle, when the latter is not equipped with the wind power recovery system according to the embodiment comprising the mechanical grille 4. Apart from the frontal aperture 24 which serves as air input, the cavity further comprises at least one other aperture serving as air output for evacuating the air incoming in said cavity from the frontal aperture 24. Said other aperture might be a lateral or bottom aperture, wherein air coming from the frontal aperture 24 is evacuated laterally or bottom the guided vehicle 2 after passing through the wind turbine 121. Optionally, said other aperture opens on a duct, i.e. is connected to a duct that is configured for directing the air flow leaving the cavity to a guided vehicle device needing air cooling. In that case and advantageously, the air flow coming from the frontal aperture is firstly directed to the wind turbine 121 and used for generating electrical power through said wind turbine 121, and then, secondly, directed to a device of the guided vehicle 2 and used for cooling down said device before being outputted outside of the guided vehicle 2 by any suitable guided vehicle air output.

The wind power recovery system 1 comprises a bearing structure 11 that is notably configured for being slidingly insertable inside or extractable from the guided vehicle 2, for instance inside or from said cavity of the guided vehicle 2. For this purpose, the bearing structure 11 may comprise moving for facilitating the insertion or extraction of the wind power recovery system 1 inside or outside the guided vehicle 2. Such moving means are for instance rolling and/or sliding means, like rollers and/or skates 111, configured for cooperating and being supported by the guiding means of the cavity, for instance configured for rolling or sliding on the rails of the cavity. The bearing structure 11 further comprises fixing means, like one or several hooks or anchor bolts, configured for fixing the bearing structure 11 to a structure of the guided vehicle. Preferentially, said fixing means allows an automatic fixation of the bearing structure 11 to the structure of the guided vehicle 2, for instance to corresponding fixing means installed on a wall of the cavity of the guided vehicle 2, or for instance to a bogie of the guided vehicle 2. In particular, during insertion of the wind power recovery system 1 inside the cavity of the guided vehicle 2, said wind power recovery system 1 will reached a position in the depths of the cavity wherein its fixing means enters into cooperation with corresponding fixing means of the guided vehicle 2 inside said cavity in order to enable an automatic fixing or coupling of the bearing structure 11 to the guided vehicle 2. Preferentially, the cooperation of the fixing means of the bearing structure 11 with the corresponding fixing means of the guided vehicle located in the cavity allows an automatic disconnection of the bearing structure 11 from the guided vehicle structure during a manual or automatic extraction of the wind power recovery system 1 from said guided vehicle 2.

The wind power recovery system 1 according to the invention comprises the following components:
- a wind turbine module 12 comprising one or several wind turbines 121. Preferentially, the wind turbine module 12 comprises an array of wind turbines 121 disposed one after another according to the length of the wind power recovery system. Preferentially, each wind turbine 121 is a horizontal-axis wind turbine with blades facing the frontal air flow, the rotation of the blades around their rotational axis driving into rotation a rotor shaft of the wind turbine, said rotor shaft being preferentially horizontal when the wind power recovery system 1 is installed inside the guided vehicle 2;
- a generator 13 for converting the rotational mechanical energy of the wind turbine 121 into electrical energy. In particular, each generator might be coupled to one wind turbine by means of a transmission system comprising for instance a transmission shaft 19 and a gearbox 18. In particular, said transmission system might comprise a gearbox 18 coupled to a rotor shaft 17 of the wind turbine, said gearbox 18 converting a slow rotational movement of the rotor shaft 17 of the wind turbine into much faster rotational movement, said much faster rotational movement being then transmitted to the generator 13 by means of the transmission shaft 19 coupling the gearbox 18 to the generator 19, and then converted into electrical energy by said generator 13;
- a control unit 14;
- a connector 16, notably configured for automatically connecting the wind power recovery system 1 to an electrical network of the guided vehicle during insertion of the wind power recovery system, and automatically disconnecting the wind power recovery system from said electrical network of the guided vehicle during the extraction of the wind power recovery system from the guided vehicle;
- optionally an additional connector, preferentially characterized by an automatic connection to a data exchange network of the guided vehicle during insertion of the wind power recovery system and an automatic disconnection from said data exchange network during said extraction, said connection of the additional connector to said data exchange network allowing to connect the control unit 14 to at least one control system 21 of the guided vehicle in order to receive data from at least one of the following systems: a train traction system, a train braking system, a speedmeter system. For instance, said control system 21 can be a traction and/or braking and/or speedmeter system;
- optionally energy storage means like a battery 15. Preferentially, the generator 13 might be directly connected to the electrical network of the guided vehicle 2 and/or indirectly in that it is first connected to the energy storage means, which are then connected to the electrical network of the guided vehicle 2.

The different components of the wind power recovery system 1 are notably fixed to and supported by the bearing structure 11, so that an extraction or insertion of the bearing structure 11 from or inside the cavity of the guided vehicle 2 moves all said different elements together with the bearing structure 11. Preferentially, the bearing structure 11 comprises a body in form of a rectangular plate supporting the wind turbine module 12, and optionally the mechanical grille 4. The control unit 14 and optionally the battery 15 are preferentially embedded in the body of the bearing structure 11.

The wind turbine module 12 comprises preferentially a housing 123, for instance a substantially cylindrical housing, fitting the wind turbine 121. Preferentially, the housing 123 comprises an air inlet section 124 and an air outlet section 125 and extends according to the length of the wind power recovery system 1, i.e. according to the length of the cavity of the guided vehicle 2, longitudinally between the air inlet section 124 and air outlet section 125. Frontal air flow 3 might be directed to the air inlet section 124 by the mechanical grille 4, passes then the air inlet section 124, then interacts with each wind turbine 121 before leaving the housing 123 through the air outlet section 125. The housing 123 preferentially forms a tunnel, e.g. a cylindrical tunnel, whose diameter is substantially constant and equal to the diameter of the wind turbine 121, and characterized by only two openings: a frontal opening forming the air inlet section 124 through which frontal air flow 3 arrives and a rear opening forming the air outlet section 125 and through which frontal air flow 3 is evacuated after having interacted with the wind turbine 121. Alternatively, walls of the cavity of the guided vehicle may form the previously described housing. In that case, the wind turbine module 12 comprises as before at least one wind turbine 121 located between an air inlet section (for frontal air entry) and an air outlet section (for frontal air evacuation) and is fixed to the bearing structure. The cavity of the guided vehicle is then preferentially configured for fitting the wind turbine module 12 so as to form the previously described housing, for instance said tunnel, once the wind power recovery system inserted inside said cavity.

The wind turbine module 12 further comprises preferentially a shroud 122, i.e. an input section opening on the mechanical grille 4 at its frontal part and configured for guiding and focusing incoming frontal air flow 3 towards the wind turbine 121. The form of the shroud 122 is preferentially a truncated cone with its basis opening at the mechanical grille 4 and its truncated extremity being connected to the inlet section 124 of the housing 123. The diameter of the truncated extremity is preferentially equal to the diameter of the inlet section 124. The specific shape of the wind turbine module 12, and notably of its shroud located in front of the housing 123 and connected to the latter, allows an easy insertion and extraction of the wind power recovery system 1 inside and outside from the guided vehicle 2. The wind turbine module comprises one or several wind turbines 120 located between the inlet section 124 and outlet section 125, each comprising blades fixed to a rotor shaft 17 for converting the incoming frontal air flow 3 into a rotational movement of the rotor shaft 17, said rotor shaft 17 being connected to the generator 19, for instance by the transmission system as described previously. Preferentially, each wind turbine is connected to its own generator and to its own storage means, all storage means having then an electrical output connected to the electrical network of the guided vehicle 2.

According to the present invention, the mechanical grille 4 controls the entry of air into the wind turbine module 12. Said mechanical grille 4 might be part of the wind power recovery system as shown in Fig. 2, or might be a component of the guided vehicle 2 (in that case, the mechanical grille 4 remains on the guided vehicle 2 when the wind power recovery system 1 is extracted from the guided vehicle 2). The mechanical grille 4 is controlled by the control unit 14 of the wind power recovery system 1. Said mechanical grille 4 is capable of regulating the entry of the frontal air flow 3. In particular, it can close the entry of air or open it. Preferentially, the mechanical grille 4 is capable of directing the frontal air flow 3 so that it maximizes the energy generated by the generator 13. For instance, the mechanical grille comprises a frame 41, preferentially a circular rotating frame, surrounding an area 42 that forms the frontal aperture of the cavity. Said frame 41 supports notably a series of parallel slats 43 extending from one side of the frame to the opposite side, likewise a Venetian blind, so as to cover uniformly the area 42 surrounded by the frame 41. In particular, each slat is rotatably mounted around a rotation axis lying within the long axis of the slat 42, so that a rotation of the slat around said rotation axis moves the slat from a first position, wherein it is in contact with an edge of at least one neighbor slat, to another position wherein it is free of contact with any neighbor slat. According to the present invention, all slats are configured for rotating synchronously by the same angle of rotation. Accordingly, when all slats are at said first position, then they close the frontal aperture 24 of the cavity, while when the slats are in said second position, then the frontal aperture 24 is open. Preferentially, the angle of rotation of the slats around their rotation axis allows to orientate or guide the frontal air flow 4 at the entry of the frontal aperture 24 so that it maximizes the electrical energy generated by the generator. Preferentially, the frame is also mounted rotating so that a rotation of the frame results in a rotation of the slats around an axis perpendicular to their long axis, i.e. perpendicular to said area surrounded by the frame 41. Advantageously, the rotation of the frame 41 supporting the slats 43 combined to the rotation of the slats 43 themselves allows to determine which combination of an angle of rotation of the frame and an angle of rotation of the slats maximizes the electrical energy generated by the generator 13. The mechanical grille 4 might be opened or closed either by the driver of the guided vehicle or automatically under control of the control unit 14.

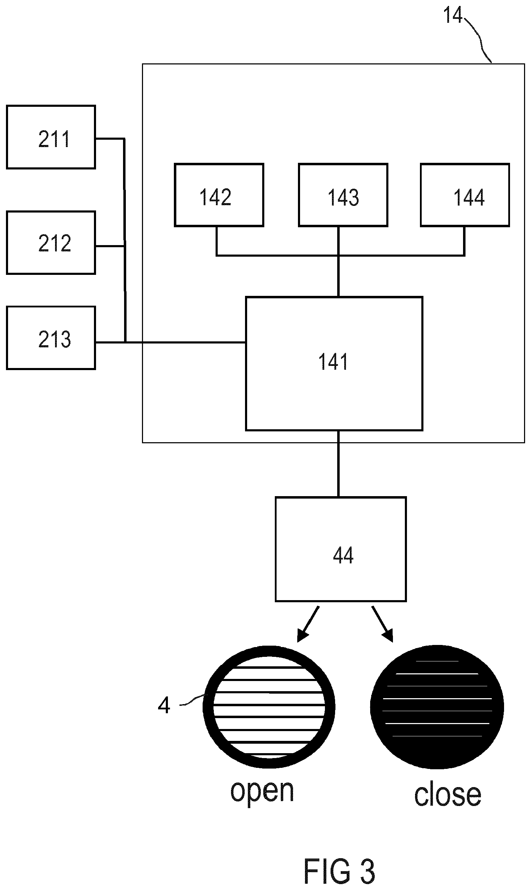

The control unit 14 of the wind power recovery system 1 is described in more details in Fig. 3. It is notably responsible for at least one, preferentially all, of the following tasks:
- controlling an opening or closing of the mechanical grille 4;
- controlling a rotation of the frame 41;
- controlling a rotation of the slats 43;
- a control of the electrical energy generated by the generator 13 and/or stored in the storage means;
- a control of the status of the wind turbine, mechanical grille, notably for failures and/or temperature, and providing a diagnostic output message for instance to the driver of the guided vehicle, or to a control system of the guided vehicle.

The control unit 14 comprises in particular one or several processors 141, a memory, connection means for receiving inputs from a control system 21 of the guided vehicle 2 and for providing control command to the mechanical grille 4, and/or generator 13, and/or storage means 15. The control unit 14 according to the invention is notably connected to at least one, preferentially all of the following systems:
- a guided vehicle traction system for receiving a first input 211 regarding a status of the traction of the guided vehicle 2;
- a guided vehicle braking system for receiving a second input 212 regarding a status of the braking of the guided vehicle 2;
- a guided vehicle speedmeter system for receiving a third input 213 regarding the speed of the guided vehicle 2;
and is configured for processing at least one, preferentially all of the first, second and third inputs received from the guided vehicle 2 during a decision process for commanding an opening or closing of the mechanical grille 4.

Preferentially, the control unit 14 comprises inertial sensors, notably a first inertial sensor 142, for instance a gyroscope, to determine a tilt of the guided vehicle 2 (i.e. inclination of the guided vehicle or rail 5 in the direction of extension of the rails 5 compared to horizontal), a second inertial sensor 143, for instance an accelerometer, for determining an acceleration of the guided vehicle 2, and a third inertial sensor 144, for instance a speed sensor, for determining the speed of the guided vehicle 2. Preferentially, the processor 141 is configured for cross checking the first, second and third inputs received by the control system of the guided vehicle 2 with information received from the inertial sensors in order to determine in which cases the mechanical grille 4 shall be open or close.

The control unit 14 is in particular configured for measuring the value of the electrical energy outputted by each generator and determining for which angle of rotation of the rotating frame 41 and/or slats 42 said electrical energy is maximized. Preferentially, the control unit 14 may receive a wind direction input from a weathercock of the guided vehicle 2 and/or a wind speed from an anemometer of the guided vehicle 2, and is configured for using said inputs for determining the angle of rotation of the rotating frame 41 and slats 43 that maximize the electrical energy produced by the generator 13, notably in function of a speed of the guided vehicle 2. The control unit 14 is thus configured for maximizing the frontal air flow 3 entering into the cavity by determining an orientation (angle of rotation) of the slats and/or rotating frame.

The control unit 14 is further configured for controlling an actuator 44 involved in the opening and closing of the mechanical grille 4, for instance an actuator 44 configured for driving into rotation said slats from the first position to the second position and vice versa. Preferred embodiments of the decision process for controlling the opening or closing of the mechanical grille 4 is described in more details below.

The control system 21 of the guided vehicle 2 is notably configured for sending said second input to the control unit 14, wherein said second input is configured for informing the control unit 14 about a braking status of the guided vehicle 2. Preferentially, the control unit 14 controls then if the second inertial sensor 143 detects a deceleration. If information provided by the second inertial sensor 143 does not match the braking status provided by the control system 21, then the control unit 14 is configured for sending a message to the driver. If the control unit 14 is informed about the braking status of the guided vehicle and optionally detects an acceleration of the guided vehicle consistent with said braking status through said second inertial sensor 143, then it automatically controls an opening of the mechanical grille 4, for instance by control of the actuator 44.

The control unit 14 is preferentially configured for closing the mechanical grille 4 if it receives a first, second and third inputs indicating no motion of the guided vehicle 2 (speed is zero, no traction, no deceleration by braking). Optionally, the control unit 14 may keep the mechanical grille 4 open if the anemometer measures a wind speed value above a predefined threshold stored in the memory of the control unit 14, wherein said threshold defines a minimum wind speed value capable of driving into rotation the wind turbine 121 for generating electrical power.

The control unit 14 is configured for keeping the mechanical grille 4 closed or closing it as soon as it receives the first input indicating a traction status, and optionally only if said traction status is confirmed by a positive acceleration value measured by the second inertial sensor.

Preferentially, the control unit 14 is also configured for opening the mechanical grille 4 if it detects through the first inertial sensor 142 a tilt of the guided vehicle 2 indicating a downhill motion of said guided vehicle 2, while the guided vehicle is not braking, moving at a high-speed cruise, and either accelerating or decelerating.

To summarize, the present invention proposes a new kind of energy recovery system using wind power resulting from the displacement of a guided vehicle for creating auxiliary electrical energy. According to the present invention, the wind power recovery system has the advantage to be completely and entirely integrated into the structure of the guided vehicle, i.e. located inside the guided vehicle, with an input air flow located at the front end of the guided vehicle wherein air pressure is the greater, said input air flow being an opening in the front end of the guided vehicle structure that allows an insertion or extraction of the wind power recovery system, facilitating therefore its maintenance.

## Claims

1. Wind power recovery system (1) configured for being installed on-board a guided vehicle (2) and comprising:
- a bearing structure (11) configured for being removably installed on-board the guided vehicle (2);
- a wind turbine module (12) fixed to the bearing structure (11) and comprising at least one wind turbine (121);
- at least one generator (13) for converting rotational mechanical energy of the wind turbine (121) into electrical energy;
- a control unit (14) configured for automatically controlling and commanding an opening or closing of a mechanical grille (4) for regulating an entry of frontal air flow (3) through the wind turbine (121);
- a connector (16) for electrically connecting the generator to an electrical network of the guided vehicle (2) in order to provide said electrical network with said electrical energy.

2. Wind power recovery system (1) according to claim 1, wherein the wind turbine module (12) comprises a housing (123) with an air inlet section (124) and an air outlet section (125) between which the wind turbine (121) is located inside said housing (123).

3. Wind power recovery system (1) according to claims 2, wherein the wind turbine module (12) comprises a shroud (122) located in front of the housing (123) and connected to the latter.

4. Wind power recovery system (1) according to claims 1-3, configured for being installable at a front end of the guided vehicle (2) under a driving cabin of said guided vehicle (2).

5. Wind power recovery system (1) according to claims 1-4, wherein the bearing structure (11) comprises moving means like sliding or rolling means for facilitating its insertion or extraction in a cavity of the guided vehicle (2).

6. Wind power recovery system (1) according to one of the claims 1-5, wherein the bearing structure (11) supports the wind turbine module (12), the generator (13), and the control unit (14).

7. Wind power recovery system (1) according to one of the claim 1-6, wherein the control unit (14) is configured for receiving and processing at least one of the following inputs in a decision process for commanding an opening or closing of the mechanical grille (4):
- a first input (211) regarding a status of the traction of the guided vehicle (2); and/or
- a second input (212) regarding a status of the braking of the guided vehicle (2); and/or
- a third input (213) regarding the speed of the guided vehicle (2).

8. Wind power recovery system (1) according to one of the claims 1-7, wherein the bearing structure (11) comprises a body in form of a rectangular plate wherein the control unit (14) and storage means (15) are embedded.

9. Wind power recovery system (1) according to one of the claims 1-8, wherein the control unit (14) is configured for maximizing the electrical energy generated by the generator (13) by orienting the frontal air flow (3) towards the wind turbine (121) through control of the mechanical grille (4).

10. Guided vehicle (2) comprising a frontal aperture (24) at its front end, said frontal aperture (24) opening on a cavity configured for housing a wind power recovery system (1) according to one of the claims 1-9.

11. Guided vehicle (2) according to claim 10, wherein said cavity extends longitudinally according to the length of the guided vehicle (2).

12. Guided vehicle (2) according to claim 10 or 11, wherein said frontal aperture (24) comprises the mechanical grille (4) commanded and controlled by the control unit (14) of the wind power recovery system (1).

13. Guided vehicle (2) according to one of the claims 10-12, wherein said cavity comprises guiding means configured for cooperating with moving means of the wind power recovery system (1).

14. Guided vehicle (2) according to one of the claims 10-13, wherein said cavity comprises at least one other aperture serving as air output, said other aperture opening on a duct configured for directing the air flow leaving the cavity to a device of the guided vehicle (2) in order to cool down said device.

15. Method for recovering wind power energy within a guided vehicle (2) by using a wind power recovery system (1) comprising a wind turbine module (12) fixed to a removable bearing structure (11) installed within a cavity of the guided vehicle (2), a generator (13), and a control unit (14), said method comprising:
- receiving by the control unit (14) an input related to a braking status of the guided vehicle (2);
- processing said input in order to determine if the guided vehicle (2) is braking; and
- if the guided vehicle (2) is braking, then commanding by means of said control unit (14) an opening of a mechanical grille (4) if not already opened, the opening of said mechanical grille (14) being configured for letting a frontal air flow (24) moving through at least one wind turbine (121) of the wind turbine module (12), driving into rotation said wind turbine (121);
- generating electrical energy from the rotation of the wind turbine (121) by means of the generator (13) coupled to the wind turbine (121);
- using said electrical energy as auxiliary power source for a device connected to an electrical network of the guided vehicle (2).
